# EUROPEAN PATENT APPLICATION

(11) **EP 4 620 669 A1**
(43) Date of publication of application: **24.09.2025**
(21) Application number: 24165534.9
(22) Date of filing: 22.03.2024
(51) Int. Cl.: B32B 27/08, B32B 17/10, B32B 27/30, B32B 27/36

(54) **METHOD FOR PRODUCING LAMINATED GLASS WITH DECORATIVE PATTERN**

(71) Applicant: Kuraray Europe GmbH, 65795 Hattersheim (DE)
(72) Inventor: ESCHRICH, Robin, 53840 Troisdorf (DE)
(74) Representative: Janßen, Christian Oliver

(57) **Abstract**

The present invention is directed to a process for providing a laminate comprising two transparent rigid sheets combined by an adhesive film with transparent and non-transparent regions **characterised in that** the adhesive film is provided at least in part non-transparent by addition of compounds reducing the light transmission in the visible spectrum and wherein said compounds are removed at least in part by applying laser radiation thereby obtaining the transparent regions.

## Description

### Technical Field

The present invention relates to a process to manufacture laminated glass with decorative pattern i.e. with transparent areas embedded in non-transparent areas.

Laminated glazing comprising two transparent rigid sheets (usually glass) combined by an adhesive film are long known, for example as safety glazing for windscreens. It is further long known to provide such glazing with transparent and non-transparent regions for example by enamel coating on the glass sheets or by adding dyes or pigments to the adhesive film.

Due to the high plasticizer content of the adhesive film, providing dyes or pigments to the adhesive film does usually not result in sharp, clear patterns. To improve this, EP3074221A1 discloses the use of thin PVB-films having a low or no plasticizer content with coatings or electrically conductive structures, which can be combined with common plasticized PVB-films to produce functionalized laminated glazing. A similar approach is described in WO2022063962 where cut-out sheets of black tinted, plasticizer-free PVB-films are applied on plasticized PVB-films to produce obscuration areas in windscreens.

However, while the known processes are sufficient to provide rather rough shaped transparent and non-transparent regions, they are not precise enough to produce decorative patterns like logos or characters in the laminate.

### Object of the invention

Object of the present invention was therefore a process for providing a laminate comprising two transparent rigid sheets combined by an adhesive film with transparent and non-transparent regions **characterised in that** the adhesive film is provided at least in part non-transparent by addition of compounds reducing the light transmission in the visible spectrum and wherein said compounds are removed at least in part by applying laser radiation thereby obtaining the transparent regions.

The transparent rigid sheets can be made from any transparent material like glass, PET or the like.

The non-transparent film or areas have preferable a light transmission in the visible spectrum of less than 5%.

The term "the compounds are removed at least in part by applying laser radiation thereby obtaining the transparent regions" refers to any method wherein the compounds lose their absorption characteristics in the visible spectrum (350-800 nm) of light, for example by (partial) chemical decomposition of the compound initiated by the laser radiation.

Accordingly, the transparent regions obtained by removing the compounds at least in part by laser radiation have a light transmission in the visible spectrum of more than 50%.

Alternatively, a lesser percentage of the non-transparency can be removed by the laser in order to create a semi-transparent region which has a light transmission in the visible range between 5 and 50%.

The thus obtained transparent regions can provide information like characters or codes like barcodes and/or logos or may have the appearance of decorative patterns without providing any information.

### Brief description of the drawings

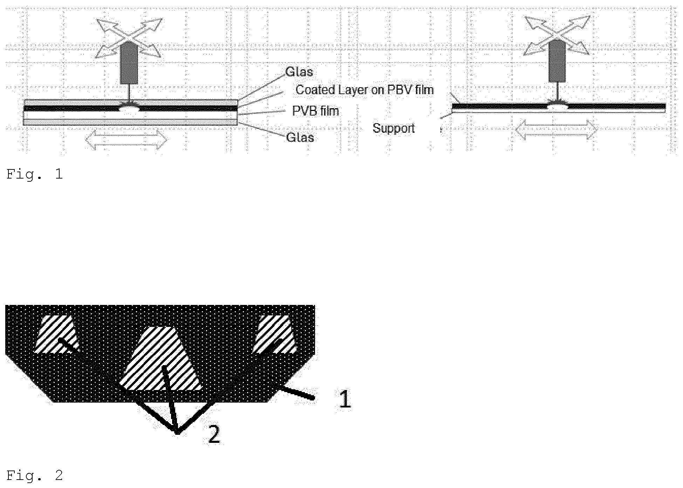

Fig. 1 shows the general concept of the invention
Fig. 2 shows by way of example transparent regions (2) as decorative patterns embedded by non-transparent regions (1)
Fig. 3 shows a characters and decorative pattern obtained by the method of the invention

### Detailed description

The compounds reducing the light transmission in the visible spectrum can be provided in the bulk of the adhesive film as homogenous mixture, but are preferably provided as printed or coated layer on at least one surface of the adhesive film. Alternatively, a second polyvinyl acetal film - hereinafter called "film A" - can be provided with a compound reducing the light transmission in the visible spectrum, preferably by coating or printing the compound onto one surface of the film A. Such films A are preferably rather thin and contain little or no plasticizer in order to facilitate the printing process and can after be combined with a standard, plasticized polyvinyl acetal film ("film B").

In a first variant of the invention, the compounds are removed at least in part before combining the two transparent rigid sheets by the adhesive film. In other words, the adhesive layer is subjected first to laser radiation to remove the compounds in part and then laminated to manufacture the final laminate.

In a second variant, the compounds are removed at least in part after combining the two transparent rigid sheets by the adhesive film. In other words, the adhesive layer is first laminated to manufacture a laminate which is then subjected to laser radiation through a transparent sheet to remove the compounds in part to yield the final laminate.

### Compounds

The term "compounds reducing the light transmission in the visible spectrum" refers to any ink or pigment with absorption characteristics in the visible spectrum of light.

Transmission of visible light was measured on a Perkin Elmer Lambda 950 UV/Vis/NIR spectrophotometer after lamination of film A with the obscuration area with a clear PVB as film B between two clear soda lime glasses 2.1 mm Planiclear^{®} from Saint Gobain. The measurement was conducted according to ISO 9050 (2003) with calculation of light transmission over the range 380 - 780 nm. For simplicity, the transmission in the range of 850 - 1200 nm was computed as a linear average of the available transmission / wavelength data pairs that fell within the range. A measurement interval of 10 nm was used in this range.

Preferable, inorganic or organic pigments are used, which do not dissolve in plasticized polyvinyl acetal and thus resist migration within or out of the adhesive film.

As pigments, preferable carbon black, iron oxides, polyaniline, perylenes or spinel pigments are used. The pigments may be dispersed in a carrier fluid like water, alcohol or mixtures of alcohol and water.

Water-based compounds are preferred over compounds based on organic solvents since they do not swell or dissolve the adhesive film and/or lead to film defects. Compounds based on organic solvents can be used if the coating is thin and/or the drying step is fast such that the solvent does not migrate into the adhesive film.

The compounds can be formulated and applied via techniques that are commonly known in the printing industry such as offset printing, rotogravure printing, flexography, and screen-printing, followed usually by a drying step.

In the variant of applying the compounds as layer, coating or printing, the dry-film thickness of such layer is from 1 to 50 um depending on printing technique and required opacity. Usually the dry-film thickness is from 2 to 20 um. High enough total dry-film thicknesses can be achieved by overlaying ink-layers through repetition of sequential printing / coating steps.

Preferably, the compounds comprise one or more binders selected from the group consisting of vinyl pyrrolidone, a water-soluble acrylic resin, an alcohol-soluble resin, e.g. a phenol resin, an acrylic resin, a styrene-maleic resin, a styrene acrylate resin, a polyurethane resin, a polyvinyl acetal resin, a polyvinyl alcohol resin or a ketone resin, most preferably the compound comprises a polyurethane resin binder.

### Laser

In the method of the invention, any kind of laser radiation may be used as long as the intensity/wavelength is sufficient to remove or decompose the coating from film A. Suitable lasers are for example Gas Lasers like Helium-Neon (HeNe) Lasers or Carbon Dioxide (CO₂) Lasers; Solid-State Lasers like Ruby Lasers, Nd:YAG Lasers, Fiber Lasers; Semiconductor Lasers like Diode Lasers; Dye Lasers; Excimer Lasers; Free Electron Lasers (FEL); Chemical Lasers or Quantum Cascade Lasers (QCL).

### Adhesive film

The adhesive film comprises preferable plasticised polyvinyl acetal.

In a first embodiment of the invention, the compounds are provided to one or more layers of films comprising plasticised polyvinyl acetal. Such films are hereinafter referred to as "film B".

In a second embodiment of the invention, the adhesive film comprises at least one layer of plasticised polyvinyl acetal (film B) and one or more layers of films comprising plasticiser-free polyvinyl acetal (hereinafter referred to as "film A") to which the compounds are provided.

In a variant of this embodiment, the adhesive layer comprises at least one film A containing a polyvinyl acetal PA and 0 - 10 % by weight of at least one plasticiser WA and at least one film B containing a polyvinyl acetal PB and 15 - 25 % by weight of at least one plasticiser WB and wherein the non-transparent coating is provided on film A.

### Film A

Laminates according to the invention may comprise one or more films A, but at least one thin film A is oriented adjacent to a glass surface of the laminated glass according to the invention. It is also possible to apply a film A to both glass surfaces, such that a laminated glass laminate with a layer sequence glass/film A/film B/film A/glass is provided.

The compounds may be provided by printing or coating on at least one surface of film A.

The printed or coated layer contains an inorganic or organic pigment, which should not dissolve in the polymer matrix and thus resist migration from film A to B.

The compound can be applied via techniques that are commonly known in the printing industry such as offset printing, rotogravure printing, flexography, and screen-printing, followed usually by a drying step.

In order to avoid wrinkling and or deformation of film A due to excessive heating in a drying step of the printing or coating process, it is crucial, that film A will not be exposed to temperatures above its glass transition temperature as measurable as Tg by DSC method. It is thus preferred, that the temperature of film A during the drying step is kept below Tg of the film by at least 3 °C or at least 5 °C or at least 10 °C or at least 15 °C or most preferred or at least by 20 °C.

The dry-film thickness of the printed parts is between 1-50 um depending on printing technique and required opacity. Usually the dry-film thickness is between 10-30 um. High enough total dry-film thicknesses can be achieved by overlaying ink-layers through repetition of sequential printing / coating steps.

Hereinafter, the term "prior to lamination" refers to the state of the films A and B prior to having any contact to each other. For example, the term refers to the composition of each film separately formed and separately wound to individual rolls. The term "prior to lamination" refers to the state for the layers or films before combining them either in the lamination process of the laminated glass or prior to building a stack from the layers used for lamination.

Film A in the starting state prior to lamination may have a thickness ratio to film B of less than 0.2.

The thickness of a film A in the starting state prior to lamination is 10 - 250 um, preferably 20 - 160 um, preferably 30 - 120 um, preferably 40 - 100 um and most preferably 50 - 80 um. This range of thickness does not include additional printing layer / coating layer on the films. In the laminated glass, the thickness of the film can increase by transfer of plasticiser from film B.

Film A is produced separately from film B (for example extruded or solvent cast) and has either no plasticiser at all or sufficiently small proportion of plasticiser so that subsequent functionalization and processing is not adversely influenced.

Films A used in accordance with the invention may contain, in the starting state prior to lamination, less than 18 % by weight less than 16 % by weight, less than 12 % by weight, less than 8 % by weight, less than 4 % by weight, less than 2 % by weight, less than 1 % by weight or even no plasticiser (0.0 % by weight). In a preferred embodiment of the invention, films A with a low plasticiser content preferably contain 0.0 - 8 % by weight of plasticiser, most preferred 0 - 4 wght %.

Since film A will preferably in direct contact with one of the inner surface of the laminated glass, it is desirable to control its adhesion to an intermediate level in order to reach satisfactory penetration resistance mandatory for the different glazing positions of a motor vehicle as stipulated in the different safety glass standards like ECE 43R. To this end, film A may contain alkali metal ion and/or earth alkali metal ion to adjust their adhesion level to glass (so called Anti-Adhesion Additives).

The thin films A are generally produced by extrusion with use of a cast-film line or in the form of a blown film. Here, a surface roughness may also be produced by controlled melt fracture or with the cast-film method additionally by use of a structured chill roll and/or structure back roll. Alternatively, solvent-cast method can be used for producing film A prior to functionalization and use in the described penetration resistant glass laminates. Films used in accordance with the invention preferably have a one-sided surface structure with a roughness Rz from 0 to 25 um, preferably Rz from 1 to 20 um, particularly preferably Rz from 3 to 15 um and in particular Rz from 4 to 12 um. It is particularly preferable if the side of film A being in contact with the glass sheet has a surface roughness Rz of no more than 20 % of its thickness.

### Film B

Film B may be any plasticized PVB-film known in the art. The films A and B may contain, in the starting state prior to lamination and/or in a stack prepared for lamination between glass sheets, a single plasticiser as well as mixtures of plasticisers both of different and identical composition. The term "different composition" refers to both the type of plasticiser and proportion thereof in the mixture. Film A and film B after lamination, i.e. in the finished laminated glass, preferably have the same plasticisers WA and WB. In a preferred variant, film A in its starting state, however, does not contain any plasticiser and after lamination contains plasticiser WB in equilibrium amount.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

The thickness of film B in the starting state is 450 - 2500 um, preferably 600 - 1000 um, preferably 700 - 900 um. A plurality of films B may be used in the invention, either being stacked on each other or separated by films A.

If films B are stretched prior to production of the sandwich and/or additionally are adapted to the shape of a screen (for example a windscreen) in a curved manner, the specified thicknesses at the moment of lamination may reduce once more by up to 20 %.

### Polyvinyl Acetal

The films A and B used in accordance with the invention contain polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The polyvinyl acetate content of the polyvinyl acetals in the films A or B can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

Independent of film A, the polyvinyl alcohol content of the polyvinyl acetals PB used in film B may be between 14 - 26 % by weight, 16 - 24 % by weight, 17 - 23 % by weight and preferably between 18 and 21 % by weight.

In a preferred embodiment of the invention, film A comprises a polyvinyl acetal PA with a proportion of vinyl alcohol groups from 6 to 26 % by weight and the film B comprises a polyvinyl acetal B with a proportion of vinyl alcohol groups from 14 to 26 % by weight.

The films A or B preferably contain uncross-linked polyvinyl acetal. The use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

### Plasticizer

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

Film B may consist of at least two sub-films B' and B'', which have a different plasticiser content.

In addition, films A and B may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

In particular, film B may comprise 0.001 to 0.1 % by weight of alkaline metal salts and/or alkaline earth salts of carboxylic acids as adhesion control agent. It is preferred that film B contains magnesium ions in an amount of at least 10 ppm, preferably 20 ppm and most preferably 30 ppm.

### Lamination Process

The present invention also relates to a method for producing the described glass laminates, in which the film A is positioned on a glass sheet, then covered by at least one film B, and a second glass sheet is then applied.

Alternatively, it is possible for film B to be positioned on a glass sheet, then to be covered by at least one film A, and for a second glass sheet to be applied.

The present invention relates furthermore to a method for producing a laminated glass wherein a stack comprising at least one film A and at least one film B is provided, the stack is positioned on a first glass sheet and a second glass sheet is then applied.

It is possible in accordance with the invention to first melt the film A onto a glass sheet over the entire area or locally by increased temperature and to then cover this with the film B. Alternatively, films A and B can be positioned jointly between two glass sheets and melted at increased temperature.

The lamination step for producing a laminated glass is preferably carried out such that films A and B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Vacuum laminators may also be used. These consist of a chamber that can be heated and evacuated, in which laminated glazings can be laminated within 30 - 60 minutes. Reduced pressures from 0.01 to 300 mbar and temperatures from 100 to 200 °C, in particular 130 - 160 °C, have proven their worth in practice.

In the simplest case, in order to produce the laminated glass laminates, film A or B is positioned on a glass sheet, and the further film B or A is positioned synchronously or subsequently. The second glass sheet is then applied and a glass film laminate is produced. Excessive air can then be removed with the aid of any pre-lamination method known to a person skilled in the art. Here, the layers are also already firstly lightly adhesively bonded to one another and to the glass.

In accordance with the invention, films B may therefore have a colour tint, which in particular has already been adapted in a prior process step to the geometry of a windscreen by the above-described shaping process.

It is also possible for the films B to have a wedge-shaped thickness profile. The laminated glass laminate according to the invention obtains a wedge-shaped thickness profile even with plane-parallel thickness profile of the film A and can be used in motor vehicle windscreens for HUD displays.

Furthermore, film B may comprise at least two layers wherein the amount of plasticizer WB in the layers differs by least 2 % by weight. For sound-damping purposes, film B comprises 3 layers of which the core layer is softer due to higher plasticizer content.

### Use of the process / the obtained laminates

The laminated glass produced according to invention may be used for decorative purposes, for example for architectural applications like windows or glaze walls with decorative patterns, logos, labels or inscriptions. Further windscreens, back-lights and side glazing for cars, busses, trucks, ships or airplanes can be provided with decorative patterns or information in form of codes like barcodes.

### Example

Example 1: Laser engravement of black printed PVB thin film that has been laminated in glass.

### Preparation of the film A with non-transparent regions

A polyethylene terephthalate (PET) film with a matt surface (grade #50 - X42G commercially available from Toray Industries, Inc.) with a thickness of 50 um was used as carrier. The surface roughness (Rz) was 4.0 um.

A 15.5 % by weight solution of polyvinyl butyral (PVB) powder (a 45:55 mixture of commercially available grades Mowital^{®} B30H and Mowital^{®} B75H) dissolved in a mixture of methanol / methyl acetate = 50:50 % by weight was used as coating fluid.

A commercially available standard solvent coating apparatus including an unwinder, a coater, a dryer and a winder was used in slot die coating mode. The substrate speed was 1.1 m/min and the wet thickness on the moving substrate was 200 um. The coating was conducted at a temperature of 26 °C. The gap between the coating lip and the moving substrate was 300 um.

The drying was performed in three sections and the respective temperatures in the drying sections were set to 60 °C, 70 °C and 125 °C. The total drying time was approximately 4 min.

A composite film comprising the PVB film A and the PET carrier was wound into rolls. No wrinkles could be identified in the composite film when inspected by eye. The carrier was peeled off from a sample of the composite to measure the thickness of the dry film A. The measurement showed that the film A had a thickness of 25 um.

### Printing onto film A

The composite film used in the first step was used in the following printing process.

A water-based printing ink comprising carbon black-based pigments and polyurethane-based binders was used in the printing process. The printing ink had a viscosity of 20 DIN-seconds (20 °C, DIN 4 mm cup).

The printing ink was applied to the film A of the composite film using a flexographic printing machine. In a first step, the composite film went through an in-line corona treatment unit to improve the ink adhesion on the surface of film A. The corona treated film then went through four printing units which were all equipped with flexible Kodak Flexcel NX relief plates.

After removal of the PET carrier film, the thus produced film A with a non-transparent region was then laminated with a standard plasticized PVB film TROSIFOL V200 with a thickness of 0.76 mm as commercial available from Kuraray Europe GmbH by standard lamination techniques into a 30cmx30cm glass laminate consisting of glass sheet/black printed PVB thin film/transparent PVB film 0,76 mm/glass sheet).

This laminate was then engraved with the S10 pro laser by Atomstack. The laser was focused onto the PVB thin film's top. The laser's output power is 10W. As parameters for the engravement a velocity of 3000mm/min and a power setting of 50% were chosen.

This way, the black print on the PVB thin film could be removed through the topmost glass layer, yielding a predetermined picture in that area.

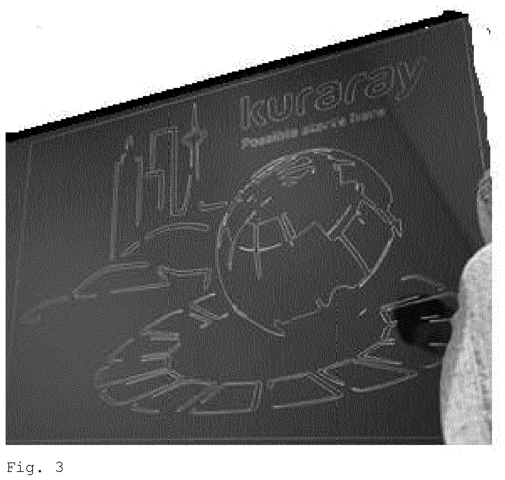

Fig. 3 shows the thus obtained characters and decorative patterns

## Claims

1. Process for providing a laminate comprising two transparent rigid sheets combined by an adhesive film with transparent and non-transparent regions **characterised in that** the adhesive film is provided at least in part non-transparent by addition of compounds reducing the light transmission in the visible spectrum and wherein said compounds are removed at least in part by applying laser radiation thereby obtaining the transparent regions.

2. Process according to claim 1 **characterised in that** the non-transparent film has a light transmission in the visible spectrum of less than 5%.

3. Process according to claim 1 **characterised in that** the transparent regions obtained by removing the compounds at least in part by laser radiation have a light transmission in the visible spectrum of more than 50%.

4. Process according to any of the claim 1 to 3 **characterised in that** the compounds reducing the light transmission in the visible spectrum are provided as layer on at least one surface of the adhesive film.

5. Laminated glass according to claim 4, **characterised in that** the layer is provided to the surface of the adhesive film adjacent to a transparent rigid sheet.

6. Process according to any of the claim 1 to 5 **characterised in that** the compounds are removed at least in part before combining the two transparent rigid sheets by the adhesive film.

7. Process according to any of the claim 1 to 5 **characterised in that** the compounds are removed at least in part after combining the two transparent rigid sheets by the adhesive film.

8. Process according to any of the claim 1 to 7 **characterised in that** the adhesive film comprises plasticised polyvinyl acetal.

9. Process according to claim 8 **characterised in that** the adhesive film comprises at least one film A containing a polyvinyl acetal PA and 0 - 10 % by weight of at least one plasticiser WA and at least one film B containing a polyvinyl acetal PB and 15 - 25 % by weight of at least one plasticiser WB and wherein the non-transparent coating is provided on film A.

10. Laminated glass according to claim 9, **characterised in that** the adhesive film comprises at least two films B wherein the amount of plasticizer WB in the layers differs by least 2 % by weight.

11. Laminated glass according to any of the claims 8 to 10, **characterised in that** the adhesive film comprises at least two films B and wherein the non-transparent coating is provided between the films B.

12. Laminated glass according to any of the claim 1 to 11, **characterised in that** the non-transparent coating is provided by pigments or dyes selected from the group consisting of carbon black, iron oxide, polyaniline, perylenes and spinel pigments.
